# EUROPÄISCHE PATENTSCHRIFT

(11) **EP 1 886 094 B1**
(45) Veröffentlichungstag und Bekanntmachung des Hinweises auf die Patenterteilung: **02.12.2015**
(21) Anmeldenummer: 06754902.2
(22) Anmeldetag: 27.04.2006
(51) Int. Cl.: G01C 21/36, B62D 15/02, B60Q 1/48

(54) **VERFAHREN ZUR FAHRERUNTERSTÜTZUNG**
DRIVER ASSISTANCE METHOD
PROCÉDÉ D'ASSISTANCE À LA CONDUITE

(30) Priorität: 19.05.2005 DE 102005023177
(43) Veröffentlichungstag der Anmeldung: 13.02.2008
(73) Patentinhaber: ROBERT BOSCH GMBH, 70442 Stuttgart (DE)
(72) Erfinder: DANZ, Christian, 14532 Kleinmachnow (DE); SCHMID, Dirk, 75397 Simmozheim (DE); LEE, Wei-Chia, 71229 Leonberg (DE); LEHNER, Philipp, 75417 Muehlacker (DE); SCHAAF, Gunther, 70806 Kornwestheim (DE)
(86) Internationale Anmeldenummer: PCT/EP2006/061894
(87) Internationale Veröffentlichungsnummer: WO 2006/122870

(56) Entgegenhaltungen:
- EP-A- 1 297 999
- EP-A- 1 327 571
- EP-A2- 1 462 342
- EP-A2- 1 500 950
- DE-A1- 10 241 175
- DE-A1- 10 261 176
- DE-A1- 10 313 222

## Beschreibung

### Stand der Technik

Die Erfindung geht aus von einem Verfahren zur Fahrerunterstützung für ein Fahrzeug nach der Gattung des Hauptanspruchs. Aus der DE 101 61316 A1 ist ein Parkvorgang-Unterstützungssystem bekannt, bei dem in einer Anzeige in einer Aufsicht sowohl eine Zielparkposition, als auch eine aktuelle Fahrzeugposition angezeigt wird. Das System enthält auch ein Ortskurvenberechnungsmittel zum Berechnen einer erwarteten Bewegungsortskurve für ein betreffendes Fahrzeug. Zum Einparken ist ein Informationsbestimmungsmittel zum Bestimmen von Parkvorgang-Unterstützungsinformationen vorgesehen.

Aus der EP 1 327 571 A1 ist eine Park-Assistenzvorrichtung und ein Verfahren zur Fahrerassistenz bekannt, bei dem ein Fahrer eine Parkposition in einer Anzeige vorwählen kann. Nach Auswahl der Parkposition wird das Fahrzeug selbständig an die von dem Fahrer gewünschte Position gefahren.

Aus der EP 1 297 999 A2 ist eine Park-Assistenzvorrichtung und ein Verfahren zum Einparken in vergleichbarer Weise bekannt, bei dem jedoch die Lenkung in der Weise erfolgt, dass eine vom Fahrer vorgenommene Lenkung gegebenenfalls unterstützt wird.

Aus der DE 103 13 222 A1 ist ein Verfahren zur Eingabe von Ortsnamen in eine Navigationsvorrichtung bekannt. In einer Karte der Navigationsvorrichtung ist eine aktuelle Position des Fahrzeugs in einem Straßennetz dargestellt.

### Vorteile der Erfindung

Das erfindungsgemäße Verfahren mit den Merkmalen des Anspruchs 1 hat demgegenüber den Vorteil, dass die Zielposition mittels einer Eingabeeinheit in der Darstellung der Fahrzeugumgebung verschoben und/oder gedreht werden kann. Hierdurch kann ein Fahrer auf einfache Weise die Zielposition des Fahrzeugs anpassen. Gegenüber einer von einem Rechner vorgegebenen Zielposition hat dies den Vorteil, dass ein Fahrer individuelle Wünsche bei dem Einparkvorgang berücksichtigen kann. Z.B. kann er das Fahrzeug so positionieren, dass er hinreichend Platz zum Öffnen, Laden oder Beladen des Kofferraums hat. Ferner kann er auch für ein Aussteigen aus dem Fahrzeug einen vergrößerten Abstand zu einer Fahrzeugseite lassen. Gegebenenfalls kann das Fahrzeug aber auch sehr eng an einer Wand oder einem anderen Hindernis positioniert werden, wenn an dieser Seite kein Passagier das Fahrzeug verlassen muss. Durch die Positionierung der Zielposition des Fahrzeugs in der Anzeige ist dabei eine besonders einfache und intuitive Einstellung der Zielposition möglich. Ein Fahrer erhält direkt eine Rückmeldung darüber, wie das Fahrzeug in der Zielposition stehen wird. Insbesondere entfällt eine eigenständige Nachkorrektur durch den Fahrer nach einem Einparkvorgang mit einer Fahrerunterstützung. Erfindungsgemäß wird die Positionierung dadurch erleichtert, dass die Zielposition von einem Rahmen umgeben ist, der den Bereich anzeigt, in dem die Zielposition maximal verschoben und/oder gedreht werden kann.

Durch die in den Unteransprüchen aufgeführten Maßnahmen sind vorteilhafte Weiterbildungen und Verbesserungen des im Anspruch 1 angegebenen Verfahrens zur Fahrerunterstützung möglich. Besonders vorteilhaft ist es, einem Fahrer Fahrhinweise zur Steuerung des Fahrzeugs zu der Zielposition auszugeben. Auf diese Weise kann der Fahrer die Zielposition sicher erreichen, wenn er den Anweisungen folgt.

Es ist weiterhin vorteilhaft, zumindest eine Fahrfunktion, z.B. einen Lenkungseinschlag, automatisch durchführen zu lassen, um das Fahrzeug auf die Zielposition zu führen.

Weiterhin ist es vorteilhaft bei einem Erreichen der Zielposition die Fahrunterstützung automatisch zu deaktivieren. Da die Zielposition erreicht wurde, ist eine weitere Unterstützung nicht erforderlich. Sie kann zu einem späteren Zeitpunkt durch den Fahrer gegebenenfalls erneut angefordert werden.

Ferner ist es vorteilhaft, eine zu fahrende Bahn des Fahrzeugs in der Anzeige darzustellen. Hierdurch wird der Parkvorgang für den Fahrer transparenter, sei es dass er den Parkvorgang selbständig ausführt oder dass er bei bestimmten Fahrfunktionen eine Unterstützung erhält.

Es ist weiterhin vorteilhaft, für den Fall, dass der Fahrer die Zielposition derartig verschiebt und/oder dreht, dass sie von dem Fahrzeug nicht erreicht werden kann, eine Warnung auszugeben. Hierdurch erhält der Fahrer unmittelbar eine Rückmeldung darüber, dass er eine andere Zielposition wählen muss.

Weiterhin ist es vorteilhaft, die Fahrzeugumgebung in einer Vogelperspektive darzustellen. Hierdurch werden die Situation des Fahrzeugs und die Zielposition besonders leicht nachvollziehbar dargestellt.

Es ist weiterhin vorteilhaft, in Verbindung mit der Zielposition Pfeile darzustellen, die mögliche Bewegungsrichtungen der Zielposition anzeigen. Der Fahrer erhält somit eine Vorankündigung, welchen Einfluss eine Betätigung einer Eingabeeinheit auf eine räumliche Veränderung der Zielposition hat.

Erfindungsgemäß wird ein Bereich angezeigt, in dem die Zielposition maximal verschoben und/oder gedreht werden kann. Der Fahrer kann somit unmittelbar erkennen, welche Bereiche als Zielposition geeignet sind und wohin das Fahrzeug bewegt werden kann.

Die gleichen Vorteile weist eine Vorrichtung zur Fahrunterstützung mit den Merkmalen des Anspruchs 9 auf.

Besonders vorteilhaft ist es, die Eingabeeinheit als einen Joystick bzw. eine Richtungstastenanordnung z.B. in Verbindung mit einem Drehknopf auszuführen. Hierdurch kann ein Fahrer intuitiv eine Richtung eingeben, in der die Zielposition verschoben oder gedreht werden soll. Eine Betätigung kann damit intuitiv erfolgen.

Die Sensoren sind insbesondere als Ultraschallsensoren, als Radarsensoren, als optische Sensoren und/oder als Kameraeinheiten ausgeführt. Diese Sensoren können einerseits so ausgewertet werden, dass rechnerisch ein Modell der Fahrzeugumgebung erstellt wird. Mittels der Kameraeinheiten kann aber auch eine tatsächliche Darstellung der Umgebung erstellt werden, in die die Zielposition eingeblendet wird.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Vorrichtung zur Fahrerunterstützung zur Durchführung des erfindungsgemäßen Verfahrens,
Figur 2 eine schematische Darstellung eines Fahrzeugs mit einer erfindungsgemäßen Vorrichtung zur Fahrerunterstützung,
Figur 3 ein weiteres Ausführungsbeispiel für eine Anzeigendarstellung bei einer Durchführung des erfindungsgemäßen Verfahrens.

### Beschreibung des Ausführungsbeispiels

Die vorliegende Erfindung kann für beliebige Fahrzeuge verwendet werden. Sie ist vorteilhaft insbesondere für Kraftfahrzeuge verwendbar, die insbesondere in Folge zunehmender Verkehrsdichte und verstärkter Bebauung sich in einem eingeengten Verkehrsraum bewegen müssen. Für einen Fahrer ist insbesondere bei besonders engen und komplizierten Fahrmanövern eine Unterstützung vorteilhaft, da selbst kleinere Kollisionen am Fahrzeug und gegebenenfalls auch an anderen Fahrzeugen hohe Sachschäden verursachen können. Die vorliegende Erfindung bezieht sich daher insbesondere auf Fahrmanöver mit verhältnismäßig geringer Geschwindigkeit, bei denen jedoch eine möglichst genaue Positionierung des Fahrzeugs erwünscht ist. Dies können z.B. enge Durchfahrten, wie z.B. ein Hineinfahren in eine Einfahrt, aber insbesondere auch Parkvorgänge sein, bei denen das Fahrzeug entweder parallel oder senkrecht zu einem Straßenverlauf in einer Parklücke abgestellt werden soll. Entsprechendes gilt für ein Fahren in eine Garage. Im Folgenden ist daher das erfindungsgemäße Verfahren anhand eines Einparkvorgangs erläutert.

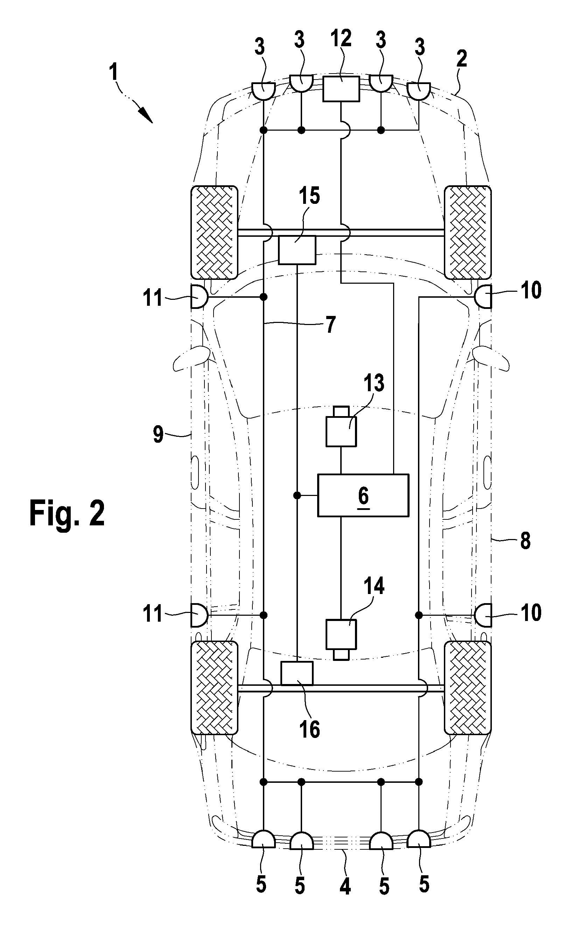

In der Figur 2 ist ein Kraftfahrzeug 1 dargestellt, das eine Fahrzeugvorderseite 2 aufweist, an der Ultraschallsensoren 3 angeordnet sind. Ebenso sind auch an der Fahrzeugrückseite 4 Ultraschallsensoren 5 angeordnet. Die Ultraschallsensoren 3, 5 messen mittels eines Echoverfahrens die Laufzeit von ausgesendeten Ultraschallsignalen zu Hindernissen in der Fahrzeugumgebung. Die Laufzeiten werden in einer Auswerteeinheit 6 ausgewertet, die mit den Ultraschallsensoren 3, 5 über einen Datenbus 7 verbunden ist. Aus den Laufzeiten werden die Abstände zu Hindernissen in der Fahrzeugumgebung bestimmt. Indem Direktechomessungen, bei denen von den Sensoren ausgesendete Signale auch wieder von diesen selbst empfangen werden, mit Kreuz-Echo-Messungen kombiniert werden, bei denen andere Sensoren die ausgesendeten Ultraschallsignale empfangen, kann neben einem Abstand auch eine räumliche Ausdehnung und Position von Hindernissen in der Fahrzeugumgebung rechnerisch durch die Auswerteeinheit 6 bestimmt werden. Ferner sind an einer rechten Fahrzeugseite 8 und an einer linken Fahrzeugseite 9 ebenfalls Ultraschallsensoren 10, 11 angeordnet. Die seitlich angeordneten Ultraschallsensoren 10, 11 dienen insbesondere dazu, bei einer Vorbeifahrt an potentiellen Parklücken diese Parklücken zu erkennen und den Fahrer auf möglicherweise für sein Fahrzeug geeignete Parklücken hinzuweisen. Ferner wird aber auch eine Abstandsmessung mit den Ultraschallsensoren 10, 11 zu Hindernissen in der Fahrzeugumgebung vorgenommen. Auch die Ultraschallsensoren 10, 11 werden bevorzugt von der Auswerteinheit 6 ausgewertet.

In weiteren Ausführungsformen kann auch ein Radarsensor 12 zur Überwachung des Fahrraums vor dem Fahrzeug an die Auswerteeinheit 6 angeschlossen sein. Ferner kann eine Kamera 13 zur Überwachung des vor dem Fahrzeug liegenden Fahrraums und/oder eine Kamera 14 zur Überwachung des rückwärtigen Fahrraums in einer weiteren Ausführungsform an die Auswerteeinheit 6 angeschlossen werden.

Aus den von den Sensoren bestimmten Abstandsdaten ermittelt die Auswerteeinheit 6 in einer bevorzugten Ausführungsform, möglichst unter einer Fusion der insgesamt empfangenen Daten, ein Umgebungsmodell für die Fahrzeugumgebung. Die Hindernisse und das Fahrzeug selbst werden hierzu rechnerisch in ein Koordinatensystem eingetragen, das die Grundlage für das Umgebungsmodell ist. Auf diesem Modell kann ein rechnerisches Bild erzeugt werden, das grafisch die Fahrzeugumgebung in einer Vogelperspektive oder in einer Schrägansicht darstellt. In einer weiteren Ausführungsform kann auch entweder für einen Raum vor dem Fahrzeug oder für einen Raum hinter dem Fahrzeug mittels der Kameras 13, 14 ein Bild der Fahrzeugumgebung aufgenommen und entsprechend dargestellt werden.

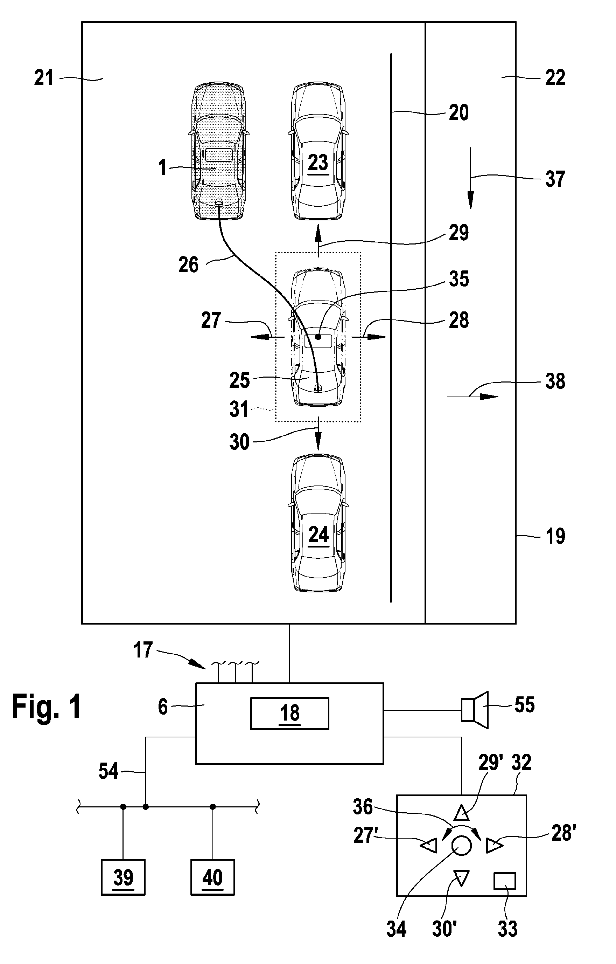

Um eine Bewegung des Fahrzeugs in der Fahrzeugumgebung zu erfassen, sind ein Lenkwinkelsensor 15 und ein Radsensor 16 mit der Auswerteeinheit 6 verbunden. Der Lenkwinkelsensor 15 stellt den aktuell eingeschlagenen Lenkwinkel fest. Der Radsensor 16 stellt eine Drehung eines Rades und damit eine Bewegung des Fahrzeugs 1 fest. Die Auswerteeinheit 6 ist mit weiteren daran angeschlossenen Einheiten im Detail in der Figur 1 gezeigt. Dateneingänge 17 für die verschiedenen Sensoren zur Erfassung der Fahrzeugumgebung sind in der Figur 1 lediglich angedeutet. Die Auswerteeinheit 6 weist eine Recheneinheit 18 auf, die eine Anzeige 19 ansteuert. Die Anzeige 19 ist bevorzugt in einer Mittelkonsole des Fahrzeugs angeordnet. Sie kann in einer anderen Ausführungsform aber auch z.B. in ein Anzeigeinstrument vor dem Fahrer eingebaut sein. Die Anzeigefläche der Anzeige 19 ist in dem hier dargestellten Ausführungsbeispiel in einen ersten Bereich 21 und in einen zweiten Bereich 22 geteilt. In dem ersten Bereich 21 ist das Fahrzeug 1 selbst in einer Aufsicht schematisch dargestellt. Das Fahrzeug 1 befindet sich parallel zu einem weiteren, ersten Fahrzeug 23, das an einem Straßenrand 20 geparkt ist. In einem für einen Einparkvorgang hinreichenden Abstand befindet sich ein zweites Fahrzeug 24 hinter dem ersten Fahrzeug 23. Die Auswerteeinheit 6 hat die Fahrzeugumgebung insbesondere mittels der Sensoren 3, 5 und 10 bei einer Vorbeifahrt des Fahrzeugs zuerst an dem zweiten Fahrzeug 24, dann an dem ersten Fahrzeug 23 vermessen. Entsprechend hat die Auswerteeinheit 6 eine Zielposition 25 in der Anzeige vorgeschlagen. In einer weiteren Ausführungsform wurde auch bereits ein Fahrweg 26 eingezeichnet, den das Fahrzeug 1 von seiner aktuellen Position zu der Zielposition 25 nehmen soll. Der Fahrweg 26 wird von der Recheneinheit 18 berechnet. Die Zielposition 25 kann nun gemäß einem ersten Pfeil 27 nach links, gemäß einem zweiten Pfeil 28 nach rechts, gemäß einem dritten Pfeil 29 nach oben in Richtung des ersten Fahrzeugs 23 und gemäß einem vierten Pfeil 30 in Richtung des zweiten Fahrzeugs 24 verschoben werden. Die Zielposition 25 ist hierbei von einem gepunktet eingezeichneten Rahmen 31 umgeben, der einen Bereich anzeigt, in dem die Zielposition 25 maximal bewegt werden kann, ohne dass das Fahrzeug 1 in der eingestellten Zielposition den Verkehr gefährdet, selber gefährdet wird, ein Hindernis berührt oder das erste Fahrzeug 23 oder das zweite Fahrzeug 24 in einem geparkten Zustand behindert. Eine Korrektur der aktuellen Zielposition 25 erfolgt bevorzugt über eine Eingabeeinheit 32, die mit der Auswerteeinheit 6 verbunden ist. Die Eingabeeinheit 32 ist z.B. im Bereich einer Mittelkonsole des Fahrzeugs angeordnet. Sie kann aber auch an einem Lenkrad des Fahrzeugs vorgesehen sein. Die Eingabeeinheit 32 weist z.B. vier Pfeiltasten auf, wobei eine Pfeiltaste nach oben 29' mit einer Bewegung in Richtung des ersten Pfeils 29 korrespondiert. Entsprechendes gilt für die Pfeiltaste nach links 27' bezüglich des ersten Pfeils 27, für die zweite Pfeiltaste 28' bezügliches des dritten Pfeils 28 und für die vierte Pfeiltaste 30' im Bezug auf den vierten Pfeil 30. Durch eine Betätigung der Pfeiltasten kann die Zielposition 25 in die entsprechenden Richtungen verschoben werden. Hat der Fahrer die Zielposition entsprechend seinen Wünschen verschoben, so betätigt er bevorzugt eine Eingabetaste 33, die ebenfalls an der Eingabeeinheit 32 angeordnet ist. In diesem Fall wird ein neuer Fahrweg von der aktuellen Fahrzeugposition des Fahrzeugs 1 zu der neu eingegebenen Zielposition von der Recheneinheit 18 berechnet. In einer ersten Ausführungsform kann sofort eine Fahrunterstützung gestartet werden. In einer weiteren Form ist für eine Durchführung der Fahrunterstützung eine erneute Betätigung der Eingabetaste 33 erforderlich.

In einer weiteren Ausführungsform kann auch ein Drehgeber 34 vorgesehen sein. Entsprechend einer Betätigung des Drehgebers 34 kann das Fahrzeug um seinen Mittelpunkt 35 nach rechts oder nach links entsprechend einer Pfeildarstellung 36 gedreht werden. Eine Positionierung der Zielposition kann dabei zwischen einem Verschieben und einem Drehen abwechseln.

Anstelle der Richtungspfeiltasten 27', 28', 29', 30' kann ein Bedienelement auch als ein sogenannter Joystick ausgeführt sein, bei dem ein stiftförmiges Bedienelement durch Krafteinwirkung in eine gewünschte Richtung gedrückt wird. In einer weiteren Ausführungsform kann auch das Lenkrad selbst zur Richtungseingabe verwendet werden, indem ein Druck axial zu der Lenkachse detektiert und als ein Verschiebungswunsch verarbeitet wird.

Die Richtungstasten 27', 28', 29', 30' sind in ihrer Anwendung nicht auf die Verschiebung der Zielposition beschränkt, sondern können als Tasten ausgeführt sein, die z.B. für eine Steuerung einer Navigationsvorrichtung oder einer Radioeinrichtung im Fahrzeug verwendet werden. Sie können für eine entsprechende Verschiebung der Zielposition durch eine Benutzereingabe aktiviert werden.

Bei dem hier dargestellten Ausführungsbeispiel gemäß der Figur 1 erfolgt ein Einparken in einem Zug. Jedoch können auch Situationen auftreten, die ein mehrzügiges Einparken erfordern. Auch hierfür können entsprechende Bahnen dargestellt und später auch ausgeführt werden. In einer weiteren Ausführungsform kann hierbei der Fahrer zwischen einem einzügigen oder einem mehrzügigen Einparken wählen. Wählt er ein einzügiges Einparken, so wird der Rahmen 31 so gewählt, dass ihm nur diejenigen Positionen zur Auswahl vorgegeben werden, die ein einzügiges Einparken ermöglichen, während bei einem mehrzügigen Einparken alle hierbei möglichen Positionen umfasst werden.

Wählt der Fahrer eine Position die durch das Fahrzeug nicht erreicht werden kann, so z.B. eine Position, die sich mit einem der Fahrzeuge 23, 24 überschneidet, so kann eine Warnung in einer ersten Ausführungsform akustisch über einen Lautsprecher 55 ausgegeben werden. In einer weiteren Ausführungsform kann auch eine farblich geänderte Anzeige der Zielposition in der Anzeige 19 erfolgen. So kann z.B. eine mögliche, anfahrbare Zielposition in grün dargestellt werden, während eine nicht mögliche Zielposition des Fahrzeugs in rot dargestellt wird. Wird die Zielposition des Fahrzeugs recht nahe an ein Hindernis heranbewegt, so kann zur Warnung des Fahrers die Zielposition in diesem Fall in gelb dargestellt werden. Der Fahrer kann somit aus der Einfärbung z.B. des in der Figur 1 gestrichelt dargestellten Rahmens der Zielposition erkennen, ob bei der von ihm momentan eingestellten Zielposition gegebenenfalls Risiken auftreten können, da diese zu nah an einem Hindernis positioniert wurde.

Hat der Fahrer nun die Fahrunterstützung angefordert, z.B. durch eine erneute Betätigung des Eingabetaste 33, so kann in einer ersten Ausführungsform über den zweiten Bereich 22 der Anzeige 19 ein Fahrhinweis an den Fahrer ausgegeben werden. In dem hier dargestellten Ausführungsbeispiel wird ein Hinweis 37 zum Zurückfahren an den Fahrer ausgegeben. Ebenso wird ein Lenkhinweis 38 ausgegeben, der den Fahrer darauf hinweist, nach rechts einzuschlagen. In einer weiteren Ausführungsform kann ein entsprechender Hinweis auch akustisch über den Lautsprecher 55 ausgegeben werden. Sollte sich der Fahrer bei dem Fahrvorgang von der vorgeschriebenen Bahn entfernen und in die Nähe eines Hindernisses geraten oder sollte sich die Fahrzeugumgebung während der Fahrt verändern, z.B. durch Fußgänger oder sich bewegende Fahrzeuge, so wird bei einem Unterschreiten eines Abstandes zu einem der Hindernisse, bevorzugt über den Lautsprecher 55, eine akustische Warnung an den Fahrer ausgegeben.

In einer weiteren Ausführungsform kann zumindest die Funktion des Lenkens von der Vorrichtung zur Fahrunterstützung übernommen werden. An den Fahrer wird weiterhin der Hinweis 37 zum Zurückfahren ausgegeben. Die Auswerteeinheit erfasst jedoch über den Lenkwinkelsensor 15 den aktuell eingestellten Lenkwinkel und steuert z.B. über einen Fahrzeugdatenbus 54 eine Lenksteuereinheit 39 an, die einen Lenkwinkel derart einstellt, dass das Fahrzeug dem geplanten Fahrweg 26 folgt. Über die Radsensoren 16 erfasst das Fahrzeug dabei jeweils die aktuelle Positionierung des Fahrzeugs 1 auf dem Fahrweg. Entsprechend wird der Lenkwinkel jeweils eingestellt. Dem Fahrer wird lediglich angezeigt, ob er vor oder zurückfahren soll. Die Lenkung wird dabei automatisch geregelt.

Hat der Fahrer die Zielposition erreicht, so wird eine Fahrunterstützung beendet. Hierbei ist bevorzugt ein vorgebbarer Toleranzrahmen um die Zielposition herum vorgesehen, z.B. ein Rahmen von etwa 5 cm in jede Richtung. In einer weiteren Ausführungsform kann ein Fahrer, z.B. durch eine erneute Betätigung der Eingabetaste 33, die Fahrerunterstützung auch abbrechen, wenn er der Auffassung ist, dass er mit der erreichten Position des Fahrzeugs zufrieden ist.

In einer weiteren Ausführungsform kann das Fahren auch vollautomatisch erfolgen, nachdem der Fahrer eine gewünschte Zielposition über die Eingabetaste 33 bestätigt hat. In diesem Fall wird auch eine Motorsteuereinheit 40 automatisch durch die Auswerteeinheit 6 angesteuert, um eine Bewegung des Fahrzeugs in Fahrtrichtung oder gegen die Fahrtrichtung entsprechend dem angezeigten Fahrweg anzusteuern und um die Zielposition zu erreichen.

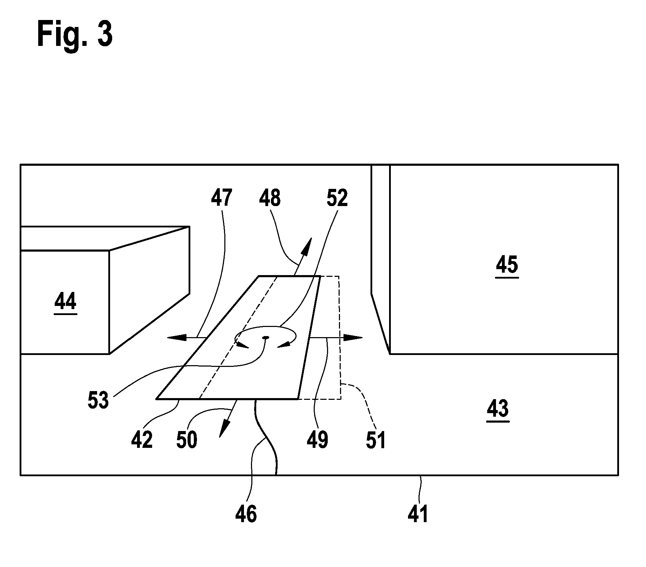

In der Figur 3 ist ein weiteres Ausführungsbeispiel einer Darstellung einer Zielposition dargestellt. In einer Anzeigefläche 41 ist eine Zielposition 42 auf einer Fahrfläche 43 dargestellt. Die Zielposition 42 befindet sich zwischen einem ersten Hindernis 44 und einem zweiten Hindernis 45, die ebenfalls perspektivisch dargestellt sind. Die aktuelle Position des Fahrzeugs ist hierbei nicht gezeigt. Jedoch ist fakultativ ein geplanter Fahrweg 46 eingezeichnet. Fakultativ sind ebenfalls Pfeile 47, 48, 49, 50 dargestellt, die mögliche Verschiebungsbewegungen der Zielposition zeigen. Gemäß dem hier dargestellten Ausführungsbeispiel wird die Zielposition aus der aktuell dargestellten Zielposition 42 in eine gestrichelt dargestellte Position 51 verschoben. In einer weiteren Ausführungsform kann jedoch das Fahrzeug auch um einen Mittelpunkt 53 in Pfeilrichtung 52 nach links oder nach rechts gedreht werden.

Das in der Figur 3 dargestellte Bild kann ebenfalls rechnerisch aus den mittels der Sensoren ermittelten Fahrzeugumgebungsdaten bestimmt werden. In einer weiteren Ausführungsform ist es aber auch möglich, dass das in der Figur 3 gezeigte Bild von einer der Kameras 13, 14 aufgenommen wird. In dieses Bild wird die Zielposition 42 rechnerisch eingeblendet, indem die Zielposition rechnerisch auf die Fahrfläche 43 projiziert wird und von der Auswerteeinheit 6 in das Kamerabild eingezeichnet wird.

## Patentansprüche

1. Verfahren zur Fahrunterstützung für ein Fahrzeug, wobei mittels Sensoren eine Fahrzeugumgebung erfasst wird, wobei die erfasste Fahrzeugumgebung zumindest teilweise in einer Anzeige dargestellt wird, wobei eine Fahrunterstützung zur Bewegung des Fahrzeugs ausgehend von der aktuellen Position zum Erreichen einer Zielposition des Fahrzeugs erfolgt, wobei die Zielposition in der Anzeige dargestellt wird und wobei die Zielposition mittels einer Eingabeeinheit in der Darstelfung der Fahrzeugumgebung in der Anzeige verschoben und/oder gedreht wird, **dadurch gekennzeichnet, dass** die Zielposition von einem Rahmen umgeben ist, der einen Bereich anzeigt, in dem die Zielposition maximal verschoben und/oder gedreht werden kann.

2. Verfahren nach Anspruch 1, **dadurch gekennzeichnet, dass** einem Fahrer Fahrhinweise zur Steuerung des Fahrzeugs zu der Zielposition ausgegeben werden.

3. Verfahren nach einem der vorherigen Ansprüche, **dadurch gekennzeichnet, dass** zumindest eine Fahrfunktion zum Erreichen der Zielposition automatisch gesteuert wird.

4. Verfahren nach einem der vorherigen Ansprüche, **dadurch gekennzeichnet, dass** bei einem Erreichen der Zielposition die Fahrunterstützung deaktiviert wird.

5. Verfahren nach einem der vorherigen Ansprüche, **dadurch gekennzeichnet, dass** ein Fahrweg zu der Zielposition in der Anzeige dargestellt wird.

6. Verfahren nach einem der vorherigen Ansprüche, **dadurch gekennzeichnet, dass** bei einer Wahl einer Zielposition, die von der aktuellen Fahrzeugposition aus nicht erreichbar ist, eine Warnung ausgegeben wird.

7. Verfahren nach einem der vorherigen Ansprüche, **dadurch gekennzeichnet, dass** die Fahrzeugumgebung in einer Vogelperspektive dargestellt wird.

8. Verfahren nach einem der vorherigen Ansprüche, **dadurch gekennzeichnet, dass** in Verbindung mit der Zielposition Pfeile dargestellt werden, die mögliche Bewegungsrichtungen der Zielposition anzeigen.

9. Vorrichtung zur Fahrunterstützung mit Sensoren (3, 5, 10, 11) zum Erfassen einer Fahrzeugumgebung, mit einer Anzeige (19) zur Darstellung von zumindest Teilen der erfassten Fahrzeugumgebung und einer Zielposition (25) des Fahrzeugs sowie mit einer Auswerteeinheit (6) zur Bestimmung eines Fahrwegs von einer aktuellen Position des Fahrzeugs zu der Zielposition (25) und mit einer Eingabeeinheit (32) zur Positionierung einer Darstellung der Zielposition (25) in der zumindest teilweisen Darstellung der Fahrzeugumgebung, **dadurch gekennzeichnet, dass** ein Bereich (31) angezeigt ist, in dem die Zielposition von einem Rahmen umgeben ist und die Zielposition (25) in dem Bereich (31) maximal verschoben und/oder gedreht werden kann.

10. Vorrichtung nach Anspruch 9, **dadurch gekennzeichnet, dass** die Eingabeeinheit (32) einen Joystick, eine Richtungstastenanordnung und/oder einen Drehknopf aufweist.

11. Vorrichtung nach einem der Ansprüche 9-10, **dadurch gekennzeichnet, dass** die Sensoren als Ultraschallsensoren, als Radarsensoren, als optische Sensoren und/oder als Kameraeinheiten ausgeführt sind.

## Claims

1. Driver assistance method for a vehicle, wherein a vehicle environment is sensed by means of sensors, wherein the sensed vehicle environment is displayed at least partially on a display, wherein driver assistance is provided for moving the vehicle from the current position in order to reach a target position of the vehicle, wherein the target position is displayed on the display, and wherein the target position is shifted and/or rotated in the representation of the vehicle environment on the display by means of an input unit, **characterized in that** the target position is surrounded by a frame which indicates a region in which the maximum shifting and/or rotation of the target position can take place.

2. Method according to Claim 1, **characterized in that** driving instructions for the steering of the vehicle to the target position are output to a driver.

3. Method according to one of the preceding claims, **characterized in that** at least one driving function for reaching the target position is controlled automatically.

4. Method according to one of the preceding claims, **characterized in that** when the target position is reached the driver assistance is deactivated.

5. Method according to one of the preceding claims, **characterized in that** a driving path to the target position is displayed on the display.

6. Method according to one of the preceding claims, **characterized in that** when a target position which cannot be reached from the current vehicle position is selected, a warning is output.

7. Method according to one of the preceding claims, **characterized in that** the vehicle environment is displayed from a bird's eye perspective.

8. Method according to one of the preceding claims, **characterized in that** arrows, which indicate possible directions of movement of the target position, are displayed in conjunction with the target position.

9. Driver assistance device having sensors (3, 5, 10, 11) for sensing a vehicle environment, having a display (19) for displaying at least parts of the sensed vehicle environment and a target position (25) of the vehicle as well as having an evaluation unit (6) for determining a driving path from a current position of the vehicle to the target position (25), and having an input unit (32) for positioning a representation of the target position (25) in the at least partial representation of the vehicle environment, **characterized in that** a region (31) is indicated in which the target position is surrounded by a frame and the maximum shifting and/or rotation of the target position (25) can take place in the region (31).

10. Device according to Claim 9, **characterized in that** the input unit (32) has a joystick, a direction pushbutton key arrangement and/or a rotary knob.

11. Device according to one of Claims 9-10, **characterized in that** the sensors are embodied as ultrasonic sensors, as radar sensors, as optical sensors and/or as camera units.

## Revendications

1. Procédé d'assistance à la conduite d'un véhicule, dans lequel
un environnement du véhicule est saisi au moyen de capteurs,
l'environnement du véhicule qui a été saisi est représenté au moins en partie sur un affichage,
une assistance à la conduite du déplacement du véhicule a lieu depuis la position actuelle jusqu'à l'atteinte d'une position visée du véhicule,
la position visée est représentée sur l'affichage et la position visée est déplacée et/ou tournée dans l'affichage au moyen d'une unité d'introduction dans la représentation de l'environnement du véhicule, **caractérisé en ce que**
la position visée est entourée par un encadrement qui indique une zone dans laquelle la position visée peut être déplacée et/ou tournée au maximum.

2. Procédé selon la revendication 1, **caractérisé en ce que** des indications de conduite permettant de conduire le véhicule vers la position cible sont délivrées au conducteur.

3. Procédé selon l'une des revendications précédentes, **caractérisé en ce qu'**au moins une fonction de roulage est commandée automatiquement en vue d'atteindre la position visée.

4. Procédé selon l'une des revendications précédentes, **caractérisé en ce que** l'assistance à la conduite est désactivée lorsque la position visée est atteinte.

5. Procédé selon l'une des revendications précédentes, **caractérisé en ce qu'**un parcours de conduite vers la position visée est représenté dans l'affichage.

6. Procédé selon l'une des revendications précédentes, **caractérisé en ce qu'**un avertissement est délivré si la position visée ne peut être atteinte depuis la position actuelle du véhicule.

7. Procédé selon l'une des revendications précédentes, **caractérisé en ce que** l'environnement du véhicule est représenté dans une perspective en vol d'oiseau.

8. Procédé selon l'une des revendications précédentes, **caractérisé en ce que** des flèches qui indiquent des directions possibles de déplacement de la position cible sont représentées en association à la position cible.

9. Ensemble d'assistance à la conduite présentant
des capteurs (3, 5, 10, 11) de saisie de l'environnement du véhicule,
un affichage (19) qui présente la saisie et d'une position visée (25) du véhicule,
une unité d'évaluation (6) qui détermine un parcours de conduite depuis la position effective du véhicule jusqu'à la position visée (25) et
une unité d'introduction (32) qui permet de positionner la position visée (25) dans la représentation au moins partielle de l'environnement du véhicule,
**caractérisé en ce que**
une zone (31) dans laquelle la position visée est entourée d'un encadrement est affichée, la position visée (25) pouvant être déplacée et/ou tournée au maximum dans la zone (31).

10. Ensemble selon la revendication 9, **caractérisé en ce que** l'unité d'introduction (32) présente un joystick, un ensemble de touches directionnelles et/ou un bouton rotatif.

11. Ensemble selon l'une des revendications 9 et 10, **caractérisé en ce que** les capteurs sont configurés comme capteurs à ultrasons, capteurs radars, capteurs optiques et/ou comme unités de caméra.
